# EUROPEAN PATENT SPECIFICATION

(11) **EP 2 397 830 B1**
(45) Date of publication and mention of the grant of the patent: **08.08.2018**
(21) Application number: 11158528.7
(22) Date of filing: 16.03.2011
(51) Int. Cl.: G01L 1/12, G01L 3/10

(54) **Torque and force measurement system**
Drehmoment- und Kraftmesssystem
Système de mesure du couple et de la force

(30) Priority: 21.06.2010 EP 10166703
(43) Date of publication of application: 21.12.2011
(73) Proprietor: ABAS Inc., Chicago IL 60706 (US)
(72) Inventor: May, Lutz, 82335, Berg (DE)
(74) Representative: Prinz & Partner mbB

(56) References cited:
- JP-A- 1 086 030
- US-A- 3 311 818
- US-A- 4 697 459
- US-A- 4 979 399
- US-A1- 2006 086 191

## Description

### Field of the invention

The present invention relates to a device and a method for sensing and measuring toque and/or force impact on a shaft, and in particular to a device and a method for contactless sensing and measuring toque and/or force impact on a shaft or any other corpus.

### Background of the invention

Torque sensing technologies are used for monitoring and controlling the torque and/or force impact on a work piece, for example a shaft.

It is known to use strain gage torque sensors for measuring torque forces by permanently attaching such a torque sensor to a test subject. Furthermore, torque measurement via differential angle sensing using at least two sensor modules to determine a differential angle in a test subject is known.

In conjunction with a flattened surface of the test subject, the surface acoustic wave technology (SAW) may be used for sensing torque forces. If the test subject is a rounded shaft, the surface has to be flattened in a region where the SAW-element is to be attached permanently.

When using the permanent shaft magnetization method for torque measurement, the test subject has to be degaussed prior moving it back and forth to a magnetic processing location and later the test subject has to be magnetically tuned to achieve the desired performance for this method.

Magnetic fields are also used for measurement of torque and/or force impact on a test subject. The known technologies require strong magnets and/or changes and preparation of the surface of a test subject. Moreover, at least a part of the sensor needs to be attached to the surface of the test subject.

A non-contact apparatus for magnetically measuring strain is known from US 3,311,818, wherein a sensing element is not located between pole shoes of a flux concentrator.

Further, a non-contact toque measurement system is known from JP 1086030, illustrating a sensing arrangement between two magnets, each having two poles, but not flux concentrator.

### Summary of the invention

It is an object of the present invention to provide an improved device and method for measuring toque and/or force impact on a shaft.

The object is solved by a device according to the independent claims, wherein further embodiments thereof are incorporated in the dependent claims.

It should be noted that the following described exemplary embodiments of the invention apply also for the method, the device, the programme element and the computer readable medium.

According to an exemplary embodiment, there is provided a torque and force measurement system for measuring toque and/or force impact on a shaft, the torque and force measurement system comprising a magnetic field generator arrangement having a main magnetic field generating direction for providing a magnetic field in the shaft to be measured, a magnetic field sensor arrangement having a main
magnetic field sensing direction for sensing a magnetic field of a magnetic field provided by the magnetic field generator arrangement upon torque and/or force impact on the shaft to be measured, wherein the main magnetic field generating direction and the main magnetic field sensing direction are inclined β to each other by about 90°, wherein the magnetic field generator arrangement comprises a ferromagnetic flux concentrator having two pole shoes to be positioned facing the shaft to be measured, wherein the magnetic field sensing arrangement is arranged between the pole shoes adjacent to the shaft to be measured.

Thus, the torque and/or force impact onto a shaft or any other form or rod or corpus can be sensed, measured and evaluated. The field generator arrangement applies a magnetic field, e.g. an AC field, which is concentrated by a flux concentrator, to the body, to which the force and/or torque impact takes place. The body modifies the morphological structure so as to influence the generated field. The sensing arrangement, the sensing direction thereof is inclined to the generated field direction measures the resulting field, applied to the sensing arrangement. The path of the generated field lines will be modified by applying a torque and/or force so that the resulting field may amend not only its strength, but also its field lines, in particular the path thereof. This modification can be determined by the sensing arrangement. The flux concentrator allows applying the generated field to the shaft or body, i.e. the exciting field lines are oriented toward the body or shaft. The sensing arrangement may be located between the pole shoes of the flux concentrator, beside the shaft. Thus, the modifications of the field can be determined. Thus, the sensing arrangement does not sense a magnetic field generated by the field generator, when the shaft or body is unstressed. It should be noted that the main field generating direction may be understood as the direction of the generated magnetic field in an unstressed condition of the shaft or body. With the 90° inclination, i.e. orthogonal arrangement of the generation direction and the sensing direction, the sensing arrangement will only sense a signal when a force and/or torque is applied to the shaft or body. Thus, the signal to noise ratio of the measuring device can be kept high, whereas the noise can be kept low. The inclination according to an embodiment of the invention applies to a bended or flat plane along the surface of the shaft or body to be measured.

According to an exemplary embodiment, the magnetic field generator arrangement comprises a coil being wound around the ferromagnetic flux concentrator.

Thus an easy generation and controlling of the field generation can be obtained. The form of generated magnetic field may be controlled by the signal form of the driving signal applied to the wound coil. The form of the magnetic field can be pulse like or periodic. The periodic signal can be a sinusoidal signal or saw tooth signal a rectangular signal or any other form of signal, depending on the character of the force and/or torque to be measured.

The magnetic field generator arrangement may comprise a second coil being wound around the ferromagnetic flux concentrator for detecting the intensity of a magnetic field generated by a first coil, i.e. the signal transfer from the first coil to the second coil, wherein the first coil may be the magnetic field generating coil. When the ferromagnetic flux concentrator is close to or touching a surface of the test subject, then the signal transfer between the first coil and the second coil is high. As soon as the ferromagnetic flux concentrator moves away from the test subject, the signal transfer weakens.

A lookup table may be used to figure out the ratio between the weakening signal transfer and the corresponding torque sensor signal gain change. Also, a formula may be used to determine the ration between the weakening signal transfer and the corresponding torque sensor signal gain change. The formula may be implemented in an evaluating unit of the torque and force measurement system.

According to an exemplary embodiment, end faces of the pole shoes have a tangential orientation to the shaft to be measured.

Thus, the distance between the pole shoes and the body or shaft to be measured can be kept constant. The efficiency can be increased. In particular, the end faces of the pole shoes can be correspondingly bended to the opposite surface of the shaft or body, In particular the end faces can be concave, in particular cylindrically concave, the direction thereof depending on the longitudinal direction of the shaft or body to be measured.

According to an exemplary embodiment, a total air gap between end faces of the pole shoes and the shaft to be measured is significantly shorter than the distance between the pole shoes.

Thus, it can be avoided that the generated magnetic field directly couples into the sensing arrangement. Moreover the field lines enter the shaft or body, in particular in case the shaft or body is of high permeability. Thus, the sensing arrangement senses and measures the field again generated by the shaft or body, which however depends on the applied force and/or torque, so that the torque and/or force can be determined by evaluating the sensed or measured signal.

According to an exemplary embodiment, end faces of the pole shoes are concave, wherein the end faces of the pole shoes are both aligned to a coinciding predetermined radius and wherein the end faces of the pole shoes correspond to a radius of the shaft to be measured.

Thus, parallel curved or flat surfaces on the shaft or body side and on the pole shoe side can be provided, allowing having a good coupling factor of between the pole shoes and the shaft or body.

According to an exemplary embodiment, the two pole shoes having geometric effective facing points, and the angular orientation of the two effective facing points of the two pole shoes with respect to the shaft to be measured is significantly less than 180°.

The effective facing points are considered as the centre of the flux form the pole shoes to the shaft or body. These effective facing points may be in the center of the end face, in case of a homogenous flux or symmetrical flux distribution, but may also be off centre, in case of in-homogenous flux distribution. When having an angle with respect to the centre axis of the shaft between the both effective facing points of less than 180°, the field line will propagate unsymmetrical, with a stronger effect towards the pole shoes. Thus the expected sensing signal between the pole shoes, where the sensing arrangement is located, is higher. The narrower the pole shoes are located, the stronger is the asymmetrical effect, as far the place between the pole shoes is sufficient for receiving the sensing arrangement and the distances can be kept effective in view of the distance of the pole shoes to the shaft and to the pole shoes with respect to each other.

According to an exemplary embodiment, the angular orientation α of the two effective facing points of the two pole shoes with respect to the shaft is substantially 90°.

According to an exemplary embodiment, the pole shoes are tapered and end faces thereof are in form of a line having an orientation being substantially parallel to the orientation of the shaft to be measured.

Thus, the main flux can be kept in a flux concentrator with a large cross section, but coupling sections for coupling the flux into the shaft can be kept low. This is for example of relevance when having shafts of small diameters or when needing place for the sensing element adjacent to the shaft or body to be measured. The longitudinal extension of the end faces in form of lines allows a constant magnetic field in longitudinal direction of the shaft.

According to an exemplary embodiment, the pole shoes are conically tapered and the end faces are in form of a tip.

Thus, the flux can be guided along a concentrator body having a larger cross section, and applying the coupling punctually. This may be of relevance when applying two field generating arrangements to the same region of the shaft and for example a single sensing unit. This may be of relevance when using two or more superimposed magnetic fields on the generator side, which cannot be applied by one single kind of flux concentrator.

According to an exemplary embodiment, the ferromagnetic flux concentrator has a form of a horseshoe.

Thus, the magnetic field generating arrangement can be kept compact, whereas the pole shoes can be adapted to the facing surface of the shaft or body.

According to an exemplary embodiment, the torque and force measurement system is designed so as to bring end faces of the pole shoes into two-dimensional contact with the shaft to be measured.

Thus, an optimal coupling of the flux can be obtained, in particular when measuring the torque and/or force in a not revolving shaft or body.

According to an exemplary embodiment, there is provided a torque and force measurement system further comprising a driving unit being coupled to the a magnetic field generator arrangement and being adapted to drive the magnetic field generator arrangement with an alternating current frequency AC frequency between 30Hz and 10000Hz. According to a further exemplary embodiment, the frequency is between 60Hz and 1000Hz. According to a further exemplary embodiment, the frequency is between 100Hz and 600Hz.

Thus, the signal can be kept on a reasonable level for measuring. In particular, the magnetic field can enter the shaft volume, so that the measured and sensed signal is not only based on a surface effect.

According to an exemplary embodiment, the magnetic field sensor arrangement comprises a sensing coil, wherein the sensing coil is located with its main magnetic field sensing direction orthogonal to the main magnetic field generating direction of the horseshoe, wherein the sensing coil is positioned between the pole shoes of the flux concentrator so as to be positioned beside the shaft to be measured.

Thus, the sensed signal can be considered as a representative for the applied torque and/or force, wherein the sensing arrangement can be avoided from noisy generating filed disturbances.

According to an exemplary embodiment, there is provided a torque and force measurement system, further comprising a housing, wherein the housing comprises a receptacle for receiving the shaft to be measured, an annular groove for receiving the magnetic field generating arrangement, the annular groove extending in a groove plane, wherein the annular groove has two end sections the end sections being adjacent to and facing towards the shaft to be measured, wherein the housing comprises a recess for receiving the magnetic field sensing arrangement, wherein the recess extends orthogonal with respect to the groove plane adjacent to the receptacle for receiving the shaft to be measured and between the end sections of the annular groove.

Thus, the geometrical position of the Held generating arrangement and the sensing arrangement can be brought into a predefined orientation to each other. Further the entire measurement system can be brought into a predefined position and orientation with respect to the shaft or body to be measured, in particular when having a non-revolving shaft.

As there is no need for pre-processing or pre-treatment of the test subject, the above and hereinafter described torque sensor may be used for hand-held sensing operation on a static or on a moving or rotating test subject, for example a shaft.

The above and hereinafter described torque and force measurement system may also be used to measure bending and shear forces as well. In this case, the signal conditioning electronics may use a different algorithm.

It should be noted that the above features may also be combined. The combination of the above features may also lead to synergetic effects, even if not explicitly described in detail.

These and other aspects of the present invention will become apparent from and elucidated with reference to the embodiments described hereinafter.

### Brief description of the drawings

Exemplary embodiments of the present invention will be described in the following with reference to the following drawings.
Fig. 1 illustrates a torque and force measurement system according to an exemplary embodiment of the invention.
Fig. 2 illustrates a schematic view of a flux concentrator, a magnetic field sensor arrangement and a shaft according to an exemplary embodiment of the invention.
Fig. 3 shows a shaft with a torque and force measurement system according to an exemplary embodiment of the invention.
Fig. 4 shows the magnetic field lines of a magnetic field generator arrangement and a magnetic field sensor arrangement according to an exemplary embodiment of the invention.
Fig. 5 shows the magnetic field lines of the magnetic field generator arrangement and the magnetic field sensor arrangement according to another exemplary embodiment of the invention.
Fig. 6 shows a torque and force measurement system with different orientation in relation to a shaft according to an exemplary embodiment of the invention.
Fig. 7 shows a torque and force measurement system according to another exemplary embodiment of the invention.
Fig. 8 illustrates a schematic view of a flux concentrator, a magnetic field sensor arrangement and a shaft according to a further exemplary embodiment of the invention.
Fig. 9 illustrates a shaft with a torque and force measurement system according to another exemplary embodiment of the invention.
Fig. 10 illustrates a torque and force measurement system according to a further exemplary embodiment of the invention.
Fig. 11 illustrates the housing with a flux concentrator according to an exemplary embodiment of the invention.
Fig. 12 illustrates a schematic view of a magnetic field generator arrangement, a magnetic field sensor arrangement, and a test subject according to an exemplary embodiment of the invention.
Fig. 13 illustrates a schematic view of a magnetic field generator arrangement, a magnetic field sensor arrangement, and a test subject according to a further exemplary embodiment of the invention.
Fig. 14 illustrates a torque and force measurement system according to another exemplary embodiment of the invention.
Fig. 15 illustrates a torque and force measurement system according to another exemplary embodiment of the invention.

### Description of exemplary embodiments of the invention

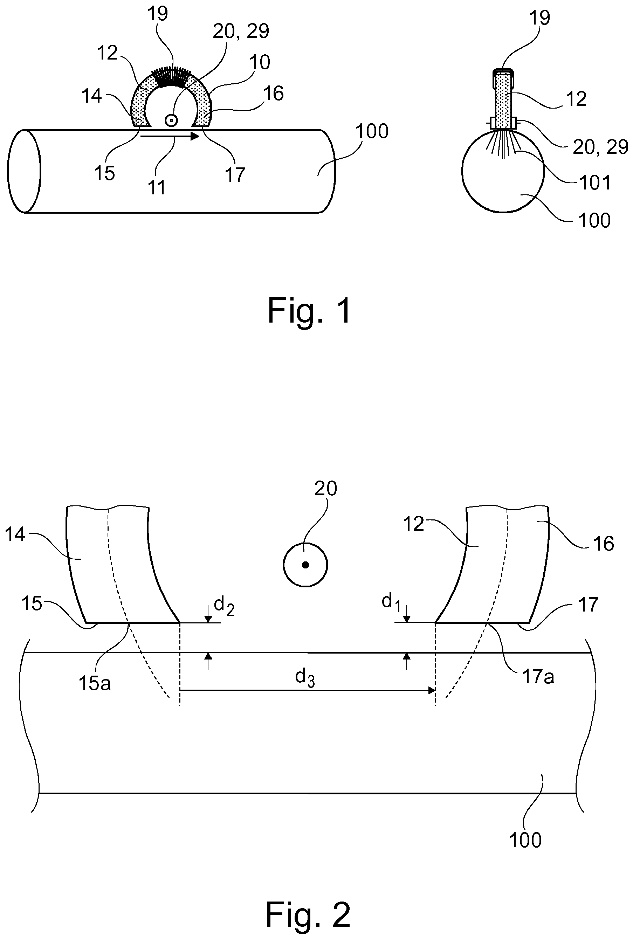

Fig. 1 illustrates a torque and force measurement system in a side view and a front view, comprising a magnetic field generator arrangement 10 and a magnetic field sensor arrangement 20. The magnetic field generator arrangement comprises a ferromagnetic flux concentrator 12, a first pole shoe 14, a second pole shoe 16, a first end face 15, a second end face 17 and a coil 19. The magnetic field generator arrangement 10 may provide a magnetic field in a shaft 100, wherein the magnetic field lines are passing through the shaft 100 along the magnetic field generating direction 11. The magnetic field sensor arrangement 20 may comprise a flux concentrator (not shown) and a coil 29.

The shaft 100 may be any test subject under torque and/or force load or stress, wherein the test subject comprises ferromagnetic material.

The coil 19 is wound around the ferromagnetic flux concentrator 12. The coil 19 may be powered by a DC or an AC signal, wherein the signal may be a current or a voltage. The signal may be either a current or voltage controlled frequency, for example ranging from 200 Hz to below 1000 Hz. The frequency may also be increased to a value above 1000 Hz.

The magnetic field sensor arrangement 20 as described above and hereinafter may be located in line with the pole shoe 14 and the pole shoe 16 along a surface of the test subject, for example of the shaft 100, Thus, the magnetic field sensor arrangement 20 may be located in a region of high or maximum field intensity of the magnetic field directly or indirectly generated by the magnetic field generator arrangement 10.

The magnetic field generator arrangement 10 as described above and hereinafter may operate with relatively low magnetic field strength in the region of <1 mT or <10 Gauss. Thus, the torque and force measurement system according to an exemplary embodiment of the invention may not interfere with other devices which may be placed close to the measurement system.

As shown in Fig. 1, the magnetic field sensor arrangement may be placed perpendicular in relation to the magnetic field generator arrangement. When there is no torque forces applied to the shaft 100, then the magnetic field lines between the first pole shoe 14 and the second pole shoe 16 run 90 degrees in relation to the sensitivity axe of the magnetic field sensor arrangement, i.e. there is no magnetic field to be detected by the magnetic field sensor arrangement (zero-condition of the torque and force measurement system),

As torque forces are applied to the shaft 100, for example in a radial direction, the magnetic field lines between the first pole shoe 14 and the second pole shoe 16 of the ferromagnetic flux concentrator will begin to twist slightly. The twisting of the magnetic field lines can be detected at the surface of the shaft 100 and the detected value will increase in linear proportion to the applied torque forces.

The signal gain can be high when having placed the magnetic field sensor arrangement with its magnetic sensitivity axis perpendicular to the zero-condition of the torque and force measurement system. The position of the sensitivity axis of the magnetic field sensor arrangement to zero may be rotated in relation to the torque and force measurement system.

It should be noted, even though the exemplary embodiments of the invention show a shaft 100, the torque and force measurement system as described above and hereinafter may be used with any test subject, which comprises ferromagnetic material.

The test subject as described above and hereinafter may be a static or a moving/rotating test subject. The test subject can be of any geometrical shape and the proportions of the test subject have no lower and upper limitations.

The test subject may be a bicycle drive shaft with 15 to 20 mm diameter (typical desired measurement range is +/- 100 Nm), or a wind turbine shaft with 250 mm diameter or more with a desirable torque measurement range well over 50,000 Nm and up to 1,000,000 Nm, for example.

The torque and force measurement system as described above and hereinafter may be able to measure positive and negative torque forces as well as static and dynamic torque forces and is insensitive to any interfering by static magnetic fields like earth magnetic field or remaining magnetization in the test subject, for example.

The magnetic field sensor arrangement 20 may be composed of copper wire, for example 150 turns of 0.4 mm copper wire.

The magnetic field generator arrangement 10 may be powered by an AC current in a frequency range below 1 kHz and above a few hundred Hz, in particular at a frequency of 500 Hz or 600 Hz.

The ferromagnetic flux concentrator as described above and hereinafter may have the form of a horseshoe but may also have the form of a three-sided square or rectangular shape,

Fig. 2 illustrates a schematic view of a ferromagnetic flux concentrator 12, a magnetic field sensor arrangement 20, and a shaft 100.

The first end face 15 is arranged in a distance d2 from the shaft 100, and the second end face 17 is arranged in a distance d1 from the shaft 100. The first pole shoe 14 has a first geometric effective facing point 15a, and the second pole shoe 16 has a second geometric effective facing point 17a.

A distance d3 is the distance between corners of the pole shoe 14 and the pole shoe 16 facing each other oil an inner surface of the pole shoes.

The distance d2 may be equal to the distance d1, and the distance d2 may also be smaller or greater. The distance d3 may also vary, depending on the proportions of the test subject, for example.

In the gap between the pole shoe 14 and the shaft 100 and the pole shoe 16 and the shaft 100 may be air or another gas, a ferromagnetic material or a component of a housing comprising the magnetic field generator arrangement 10.

The magnetic field sensor arrangement 20 is arranged such that it is perpendicular in relation to the magnetic field lines 101 shown in Fig. 1 between the pole shoe 14 and the pole shoe 16.

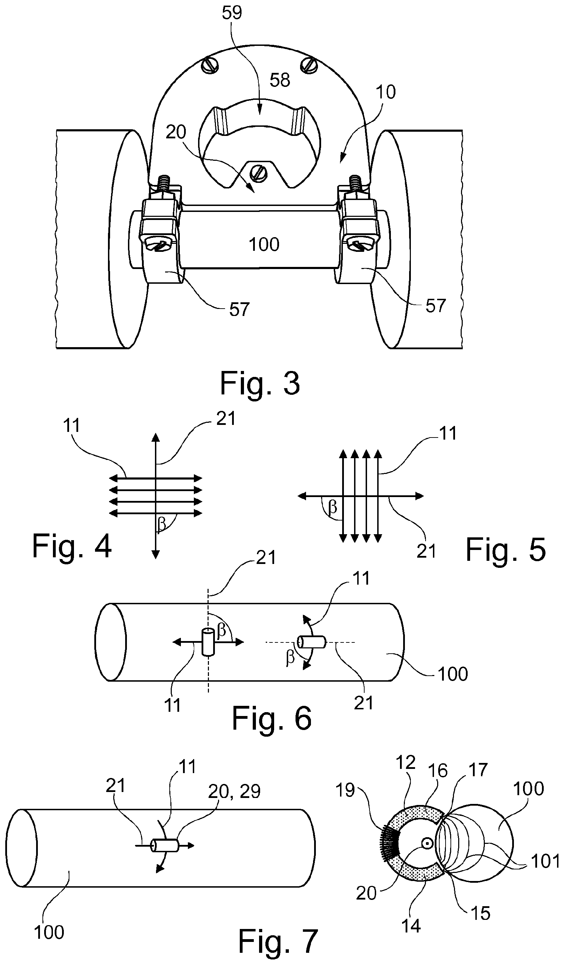

Fig. 3 depicts an application example of a torque and force measurement system according to an exemplary embodiment of the invention. Fig. 3 depicts a torque and force measurement system attached to a shaft 100, wherein the torque and force measurement system comprises a receptacle 59 with a housing cover 58, wherein the magnetic field generator arrangement 10 and the magnetic field sensor arrangement 20 are arranged in the receptacle 59, wherein the torque and force measurement system is attached to the shaft 100 by fastening elements 57.

The receptacle 59 and the housing cover 58 may comprise ferromagnetic, diamagnetic, paramagnetic, or non-magnetic materials, for example plastics or other synthetic materials.

Fig. 4 depicts the orientation of the magnetic field generating direction 11 and the magnetic field sensing direction 21, the inclining angle β between the magnetic field generating direction 11 and the magnetic field sensing direction 21 in an exemplary embodiment of the invention.

The magnetic field generating direction 11 is parallel to an axe of the shaft 100, and the magnetic field sensing direction 21 is perpendicular to the axe of the shaft 100. Therefore, the inclining β is 90 degrees.

Fig. 5 shows the magnetic field generating direction 11 and the magnetic field sensing direction 21, wherein the magnetic field sensing direction 21 is parallel to an axe of the shaft 100, i.e. the orientation of the magnetic field generating direction and the magnetic field sensing direction has been rotated by 90 degrees in relation to the arrangement depicted in Fig. 4, respectively. The inclining angle β between the magnetic field generating direction 11 and the magnetic field sensing direction 21 is also 90 degrees.

Fig. 6 shows a shaft 100 with a first torque and force measurement system and a second torque and force measurement system.

The torque and force measurement system is arranged such that the magnetic field sensing direction 21 is perpendicular to an axe of the shaft 100 (shown in Fig. 4) or such that the magnetic field sensing direction 21 is parallel to an axe of the shaft 100 (shown in Fig. 5). The magnetic field generating direction 11 is perpendicular to the magnetic field sensing direction 21, i.e. the inclining angle β is 90 degrees.

Fig. 7 shows a side view and a front view of a torque and force measurement system in the orientation shown in Fig. 5 in relation to the shaft 100.

The magnetic field generating direction 11 of the magnetic field generator arrangement is perpendicular to an axe of the shaft 100. The magnetic field sensing direction 21 is parallel to an axe of the shaft 100. The ferromagnetic flux concentrator 12 is arranged such that an end face 15 of the pole shoe 14 and an end face 17 of the pole shoe 16 are opposite to a surface of the shaft 1 00, such that the magnetic field lines 101 generated by the coil 19 pervade the shaft 100.

The magnetic field sensor arrangement 20 is arranged such that the magnetic field sensing direction 21 is perpendicular to the magnetic field generating direction 11, i.e. the inclining angle β is 90 degrees.

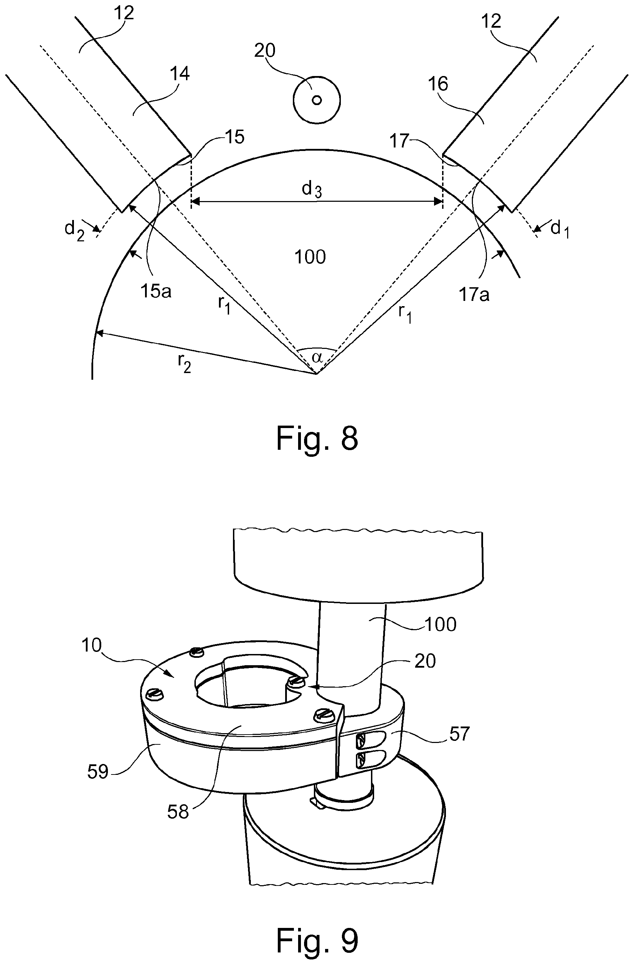

Fig. 8 shows a schematic view of the torque and force measurement system depicted in Fig. 7.

Fig. 8 shows the flux concentrator 12, having a pole shoe 14 with an end face 15 and a geometric effective facing point 15a, and pole shoe 16 with an end face and a geometric effective facing point 17a. The angular orientation α is the angle between the two geometric effective facing points 15a, 17a of the pole shoe 14 and the pole shoe 16. The radius r2 is the radius of the shaft 100, i.e. the distance from the axe of the shaft 100 to the surface of the shaft 100. The distance d2 is the distance between the end face 15 and the shaft 100, and the distance d1 is the distance between the end face 17 and the shaft 100. The radius r1 is the coinciding radius of the end faces. The distance d2 may be equal to the distance d1, but also may be smaller or greater than d1. In the case d2 is equal to d1, r1 is equal to r2 + d2 and is equal to r2 + d1. As mentioned above, the test subject may be of any geometrical shape, therefore the pole shoe 14 and the pole shoe 16 may be arranged to correspond with the geometrical shape of the test subject.

In case the test subject is a shaft with a circular cross-section, the end face 15 and the end face 17 may be concave, to correspond with the surface of the shaft 100.

The magnetic field sensor arrangement 20 may be arranged such that the magnetic field sensing direction 21 is parallel to an axe of the shaft 100.

The ferromagnetic flux concentrator 12 may be adapted such that α is in particular 90 degrees. Indeed, α may be any value less than 180 degrees if the magnetic field sensor arrangement 20 is arranged between the pole shoe 14 and the pole shoe 16.

The magnetic field sensor arrangement 20 may also be arranged opposite of the ferromagnetic flux concentrator 12 if α is greater than 180 degrees. Hence, the test subject, for example the shaft 100, is in between the ferromagnetic flux concentrator 12 and the magnetic field sensor arrangement 20.

Fig. 9 depicts an exemplary application of the torque and force measurement system, wherein the torque and force measurement system is arranged in relation to the shaft 100 as shown in Fig. 5 and Fig. 7. The torque and force measurement system is attached to the shaft 100 by the fastening elements 57 and has a receptacle 59 with a housing cover 58, wherein the receptacle 59 contains the magnetic field generator arrangement 10 and the magnetic field sensor arrangement 20.

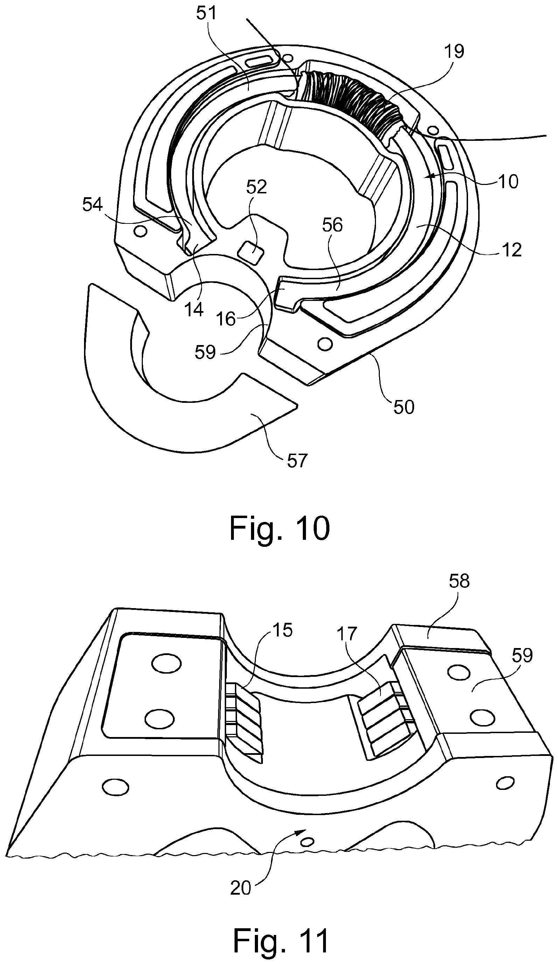

Fig. 10 shows a housing 50 with a magnetic field generator arrangement 10. The magnetic field generator arrangement 10 comprises a ferromagnetic flux concentrator 12, a pole shoe 14 and a pole shoe 16, and a coil 19. The housing 50 comprises an annular groove 51, a recess 52, an end section 54, an end section 56, a fastening element 57, and a receptacle 59.

The annular groove 51 is adapted to receive the ferromagnetic flux concentrator 12 and the coil 19. The recess 52 is adapted to receive the magnetic field sensor arrangement 20 (not shown). The fastening elements 57 and the receptacle 59 may be adapted to be fastened to a test subject, for example a shaft. The receptacle 59 may be adapted such that a distance between the test subject (not shown) and the pole shoe 14 and the pole shoe 16, respectively, may vary.

Fig. 11 depicts another exemplary embodiment of the receptacle 59. The receptacle 59 and the housing cover 58 may be adapted such that the end face 15 and the end face 17 may contact a surface of the test subject.

The receptacle 59 and/or the end faces 15, 17 of the ferromagnetic flux concentrator 12 may also be applied such that the end faces 15, 17 are positioned in a predetermined distance d1, d2 from the surface of the test subject.

The gap between the end faces 15, 17 and the surface of the test subject as described above and hereinafter may comprise air or another gas, a liquid or a lubricant. The closer the end faces 15, 17 are to the surface of the test subject, the higher the measurement signal gain will be.

The ferromagnetic flux concentrator 12 as described above and hereinafter may comprise a multitude of plates.

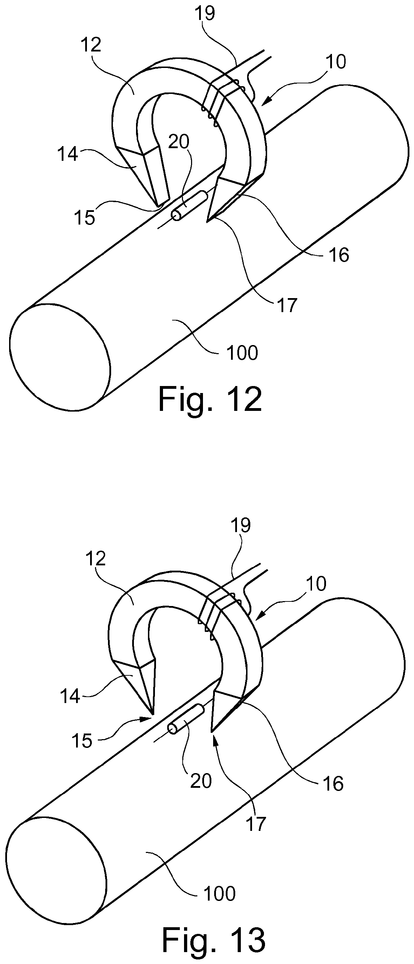

Fig. 12 illustrates a torque and force measurement system in an orientation in relation to the shaft 100 as described in Fig. 5.

The ferromagnetic flux concentrator 12 is arranged such that the magnetic field lines are perpendicular to an axe of the shaft 100. The magnetic field sensor arrangement 20 is arranged such that the magnetic field sensing direction 21 is parallel to an axe of the shaft 100.

The end face 15 of the pole shoe 14 and the end face 17 of the pole shoe 16 are formed like a ridge or an edge. This form of the end faces 15, 17 may concentrate the magnetic field lines such that the quality of the detected signal by the magnetic field sensor arrangement 20 is improved.

Especially while measuring a static test subject, the end faces 15, 17 may contact the surface of the test subject, but there also may be a distance greater than zero between the end faces 15, 17 and the surface of a test subject.

Fig. 13 shows another exemplary embodiment of the ferromagnetic flux concentrator 12.

The end faces 15, 17 may be formed like a peak or a tip.

Even though the torque and force measurement system is shown in an orientation depicted in Fig. 5, a ferromagnetic flux concentrator 12 with pointed end faces 15, 17 as shown in Fig. 13 may also be arranged in an orientation as shown in Fig. 4. Indeed, a ferromagnetic flux concentrator 12 with pointed end faces 15, 17 as shown in Fig. 13 may be arranged in any orientation in relation to a test subject.

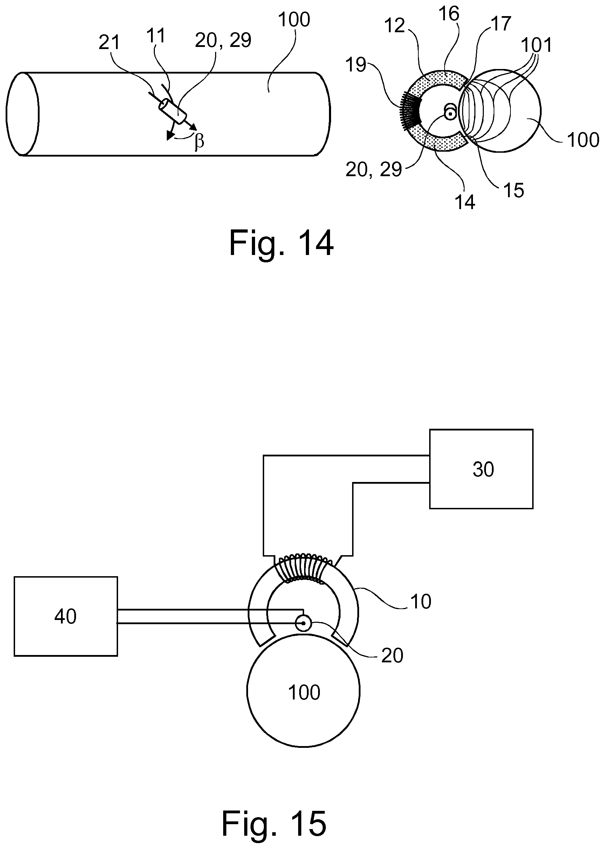

Fig. 14 shows a torque and force measurement system according to another exemplary embodiment of the invention. The magnetic field sensor arrangement 20 is rotated in relation to the magnetic field generator arrangement 10, such that the magnetic field sensing direction 21 has an inclining angle β unequal 90 degrees in relation to the magnetic field generating direction 11. In particular, the inclining angle β may be 45 degrees or between 85 degrees and 95 degrees.

Even though Fig. 14 shows the magnetic field sensing direction 21 not parallel to an axe of the shaft 100, the torque and force measurement system may be arranged such that the magnetic field sensing direction 21 is parallel to an axe of the shaft 100, and the magnetic field generating direction 11 is being rotated such that a determined inclining angle β between the magnetic field generating direction 11 and the magnetic field sensing direction 21 is adjusted.

Fig. 15 shows a torque and force measurement system, comprising a magnetic field generator arrangement 10, a magnetic field sensor arrangement 20, a driving unit 30, and an evaluating unit 40.

A driving unit is adapted to supply the coil 19 of the magnetic field generator arrangement 10 with a DC/AC current or voltage.

The evaluating unit 40 is connected to the magnetic field sensor arrangement 20 in order to receive a detected signal and to evaluate a torque and/or force on a test subject, for example a shaft 100.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

It has to be noted that exemplary embodiments of the invention are described with reference to different subject matters. In particular, some exemplary embodiments are described with reference to apparatus type claims whereas other exemplary embodiments are described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage.

A computer program may be stored and/or distributed on a suitable medium, such as an optical storage medium or a solid state medium supplied together with or as part of other hardware, but may also be distributed in other forms, such as via the internet or other wired or wireless telecommunication systems.

### List of reference signs

- 10: magnetic field generator arrangement
- 11: magnetic field generating direction
- 12: ferromagnetic flux concentrator
- 14: pole shoe
- 15, 17: end face
- 15a, 17a: geometric effective facing point
- 16: pole shoe
- 19: coil
- 20: magnetic field sensor arrangement
- 21: magnetic field sensing direction
- 29: coil
- 30: driving unit
- 40: evaluating unit
- 50: housing
- 51: annular groove
- 52: recess
- 54, 56: end section
- 57: fastening element
- 58: housing cover
- 59: receptacle
- 100: shaft
- 101: magnetic field lines
- α: angular orientation of the two effective facing points of the pole shoes
- β: inclining angle between the magnetic field generating direction and the magnetic field sensing direction
- d1, d2: distance between shaft and end face
- d3: distance between pole shoes
- r1: coinciding radius of the end faces
- r2: radius of the shaft

## Claims

1. Torque and force measurement system for measuring torque and/or force impact on a shaft (100), the torque and force measurement system comprising:
a magnetic field generator arrangement (10) having a main magnetic field generating direction (11) for providing a magnetic field in the shaft to be measured,
a magnetic field sensor arrangement (20) having a main magnetic field sensing direction (21) for sensing a magnetic field of a magnetic field provided by the magnetic field generator arrangement, upon torque and/or force impact on the shaft to be measured,
wherein the magnetic field generator arrangement comprises a ferromagnetic flux concentrator (12) having two pole shoes (14, 16) to be positioned facing the shaft to be measured,
**characterized in that**
the magnetic field sensing arrangement is arranged between the pole shoes adjacent to the shaft to be measured, and
the main magnetic field generating direction and the main magnetic field sensing direction are inclined (β) to each other, by about 90°.

2. Torque and force measurement system according to claim 1, wherein the magnetic field generator arrangement (10) comprises a coil (19) being wound around the ferromagnetic flux concentrator (12).

3. Torque and force measurement system according to any one of claims 1 to 2, wherein end faces (15, 17) of the pole shoes (14, 16) have a tangential orientation to the shaft (100) to be measured.

4. Torque and force measurement system according to any one of claims 1 to 3, wherein a total air gap (d1 d2) between end faces (15, 17) of the pole shoes (14, 16) and the shaft (100) to be measured is significantly shorter than the distance (d3) between the pole shoes.

5. Torque and force measurement system according to any one of claims 1 to 4, wherein end faces (15, 17) of the pole shoes (14, 16) are concave, wherein the end faces of the pole shoes are both maligned to a coinciding predetermined radius (r1) and wherein the end faces of the pole shoes correspond to a radius (r2) of the shaft (100) to be measured.

6. Torque and force measurement system according to any one of claims 1 to 5, wherein the two pole shoes (14, 16) having geometric effective facing points (15a, 17a), and the angular orientation (α) of the two effective facing points of the two pole shoes with respect to the shaft to be measured is significantly less than 180°.

7. Torque and force measurement system according to claim 6, wherein the angular orientation (α) of the two effective facing points (15a, 17a) of the two pole shoes (14, 16) with respect to the shaft (100) is substantially 90°.

8. Torque and force measurement system according to any one of claims 1 to 7, wherein the pole shoes (14, 16) are tapered and end faces (15, 17) thereof are in form of a line having an orientation being substantially parallel to the orientation of the shaft (100) to be measured.

9. Torque and force measurement system according to any one of claims 1 to 8, wherein the pole shoes (14, 16) are conically tapered and the end faces (15, 17) are in form of a tip.

10. Torque and force measurement system according to anyone of claims 1 to 9, wherein the ferromagnetic flux concentrator (12) has a form of a horseshoe.

11. Torque and force measurement system according to any one of claims 1 to 10, wherein the torque and force measurement system is designed so as to bring end faces (15, 17) of the pole shoes (14, 16) into two-dimensional contact with the shaft (100) to be measured,

12. Torque and force measurement system according to any one of claims 1 to 11, further comprising a driving unit (30) being coupled to the a magnetic field generator arrangement (10) and being adapted to drive the magnetic field generator arrangement with an alternating current frequency AC frequency between 30Hz and 10000Hz, preferably between 60Hz and 1000Hz, and more preferably between 100Hz and 600Hz.

13. Torque and force measurement system according to any one of claims 1 to 12, wherein the magnetic field sensor arrangement (20) comprises a sensing coil (29), wherein the sensing coil is located with its main magnetic field sensing direction (21) orthogonal to the main magnetic field generating direction (11) of the horseshoe, wherein the sensing coil is positioned between the pole shoes (14,16)M of the flux concentrator (12) so as to be positioned beside the shaft (100) to be measured.

14. Torque and force measurement system according to any one of claims 1 to 13, further comprising a housing (50), wherein the housing comprises a receptacle (59) for receiving the shaft, to be measured, an annular groove (51) for receiving the magnetic field generating arrangement (10), the annular groove extending in a groove plane, wherein the annular groove has two end sections (54, 56) the end sections being adjacent to and facing towards the shaft (100) to be measured, wherein the housing comprises a recess (52) for receiving the magnetic field sensing arrangement (20), wherein the recess extends orthogonal with respect to the groove plane adjacent to the receptacle for receiving the shaft to be measured and between the end sections of the annular groove,

## Patentansprüche

1. Drehmoment- und Kraftmesssystem zur Messung einer Drehmoment- und/oder Krafteinwirkung auf eine Welle (100), wobei das Drehmoment- und Kraftmesssystem Folgendes umfasst:
eine Magnetfelderzeugungsanordnung (10) mit einer Hauptmagnetfelderzeugungsrichtung (11) zur Bereitstellung eines Magnetfelds in der zu messenden Welle,
eine Magnetfelderfassungsanordnung (20) mit einer Hauptmagnetfelderfassungsrichtung (21) zur Erfassung eines Magnetfelds eines von der Magnetfelderzeugungsanordnung erzeugten Magnetfelds bei einer Drehmoment- und/oder Krafteinwirkung auf die zu messende Welle,
wobei die Magnetfelderzeugungsanordnung einen ferromagnetischen Flusskonzentrator (12) mit zwei Polschuhen (14, 16) aufweist, die der zu messenden Welle zugewandt zu positionieren sind,
**dadurch gekennzeichnet, dass**
die Magnetfelderfassungsanordnung zwischen den Polschuhen angrenzend an die zu messende Welle angeordnet ist und
die Hauptmagnetfelderzeugungsrichtung und die Hauptmagnetfelderfassungsrichtung um etwa 90° zueinander geneigt (β) sind.

2. Drehmoment- und Kraftmesssystem nach Anspruch 1, wobei die Magnetfelderzeugungsanordnung (10) eine Spule (19) aufweist, die um den ferromagnetischen Flusskonzentrator (12) gewunden ist.

3. Drehmoment- und Kraftmesssystem nach einem der Ansprüche 1 bis 2, wobei Endflächen (15, 17) der Polschuhe (14, 16) eine tangentiale Ausrichtung zu der zu messenden Welle (100) haben.

4. Drehmoment- und Kraftmesssystem nach einem der Ansprüche 1 bis 3, wobei ein Gesamtluftspalt (d1, d2) zwischen Endflächen (15, 17) der Polschuhe (14, 16) und der zu messenden Welle (100) deutlich kleiner ist als der Abstand (d3) zwischen den Polschuhen.

5. Drehmoment- und Kraftmesssystem nach einem der Ansprüche 1 bis 4, wobei Endflächen (15, 17) der Polschuhe (14, 16) konkav sind, wobei die Endflächen der Polschuhe beide auf einen übereinstimmenden vorbestimmten Radius (r1) ausgerichtet sind und die Endflächen der Polschuhe einem Radius (r2) der zu messenden Welle (100) entsprechen.

6. Drehmoment- und Kraftmesssystem nach einem der Ansprüche 1 bis 5, wobei die beiden Polschuhe (14, 16) geometrische effektive Flächenpunkte (15a, 17a) aufweisen und die Winkelausrichtung (α) der beiden effektiven Flächenpunkte der beiden Polschuhe in Bezug auf die zu messende Welle deutlich geringer ist als 180°.

7. Drehmoment- und Kraftmesssystem nach Anspruch 6, wobei die Winkelausrichtung (α) der beiden effektiven Flächenpunkte (15a, 17a) der beiden Polschuhe (14, 16) in Bezug auf die Welle (100) im Wesentlichen 90° beträgt.

8. Drehmoment- und Kraftmesssystem nach einem der Ansprüche 1 bis 7, wobei die Polschuhe (14, 16) verjüngt sind und ihre Endflächen (15, 17) die Form einer Linie mit einer Ausrichtung haben, die im Wesentlichen parallel zur Ausrichtung der zu messenden Welle (100) verläuft.

9. Drehmoment- und Kraftmesssystem nach einem der Ansprüche 1 bis 8, wobei die Polschuhe (14, 16) konisch verjüngt sind und die Endflächen (15, 17) die Form einer Spitze haben.

10. Drehmoment- und Kraftmesssystem nach einem der Ansprüche 1 bis 9, wobei der ferromagnetische Flusskonzentrator (12) hufeisenförmig ist.

11. Drehmoment- und Kraftmesssystem nach einem der Ansprüche 1 bis 10, wobei das Drehmoment- und Kraftmesssystem dazu ausgebildet ist, eine Endfläche (15, 17) der Polschuhe (14, 16) in zweidimensionalem Kontakt mit der zu messenden Welle (100) zu bringen.

12. Drehmoment- und Kraftmesssystem nach einem der Ansprüche 1 bis 11, das ferner eine Antriebseinheit (30) aufweist, die an die Magnetfelderzeugungsanordnung (10) gekoppelt ist und die Magnetfelderzeugungsanordnung mit einer Wechselstromfrequenz, AC-Frequenz, von 30 HZ bis 10000 Hz, vorzugsweise von 60 HZ bis 1000 HZ, weiter vorzugsweise von 100 Hz bis 600 Hz antreiben kann.

13. Drehmoment- und Kraftmesssystem nach einem der Ansprüche 1 bis 12, wobei die Magnetfelderfassungsanordnung (20) eine Erfassungsspule (29) aufweist, wobei die Erfassungsspule so angeordnet ist, dass ihre Hauptmagnetfelderfassungsrichtung (21) orthogonal zur Hauptmagnetfelderzeugungsrichtung (11) des Hufeisens verläuft, wobei die Erfassungsspule so zwischen den Polschuhen (14, 16) des Flusskonzentrators (12) positioniert ist, dass sie neben der zu messenden Welle (100) positioniert ist.

14. Drehmoment- und Kraftmesssystem nach einem der Ansprüche 1 bis 13, das ferner ein Gehäuse (50) aufweist, wobei das Gehäuse eine Aufnahme (59) zum Aufnehmen der zu messenden Welle und eine ringförmige Nut (51) zum Aufnehmen der Magnetfelderzeugungsanordnung (10) aufweist, wobei sich die ringförmige Nut in einer Nutebene erstreckt und die ringförmige Nut zwei Endabschnitte (54, 56) aufweist, wobei die Endabschnitte an die zu messende Welle (100) angrenzen und dieser zugewandt sind, wobei das Gehäuse eine Ausnehmung (52) zum Aufnehmen der Magnetfelderfassungsanordnung (20) aufweist, wobei sich die Ausnehmung orthogonal zur Nutebene angrenzend an die Aufnahme zum Aufnehmen der zu messenden Welle und zwischen den Endabschnitten der ringförmigen Nut erstreckt.

## Revendications

1. Système de mesure de couple et de force pour mesurer l'impact d'un couple et/ou d'une force sur un arbre (100), le système de mesure de couple et de force comprenant :
un agencement de génération de champ magnétique (10) présentant un sens de génération de champ magnétique principal (11) pour fournir un champ magnétique dans l'arbre à mesurer,
un agencement de détection de champ magnétique (20) présentant un sens de de détection de champ magnétique principal (21) pour détecter un champ magnétique d'un champ magnétique fourni par l'agencement de génération de champ magnétique lors de l'impact d'un couple et/ou d'une force sur l'arbre à mesurer,
l'agencement de génération de champ magnétique comprenant un concentrateur de flux ferromagnétique (12) qui présente deux pièces polaires (14, 16) à positionner de manière à être tournées vers l'arbre à mesurer,
**caractérisé en ce que**
l'agencement de détection de champ magnétique est agencé entre les pièces polaires de manière adjacente à l'arbre à mesurer, et
le sens de génération de champ magnétique principal et le sens de détection de champ magnétique principal étant inclinés (β) l'un par rapport à l'autre sur environ 90°.

2. Système de mesure de couple et de force selon la revendication 1, l'agencement de génération de champ magnétique (10) comprenant une bobine (19) enroulée autour du concentrateur de flux ferromagnétique (12).

3. Système de mesure de couple et de force selon l'une des revendications 1 à 2, des faces d'extrémité (15, 17) des pièces polaires (14, 16) présentant une orientation tangentielle par rapport à l'arbre (100) à mesurer.

4. Système de mesure de couple et de force selon l'une des revendications 1 à 3, un entrefer total (d1, d2) entre des faces d'extrémité (15, 17) des pièces polaires (14, 16) et l'arbre (100) à mesurer étant nettement inférieur à la distance (d3) entre les pièces polaires.

5. Système de mesure de couple et de force selon l'une des revendications 1 à 4, des faces d'extrémité (15, 17) des pièces polaires (14, 16) étant concaves, les faces d'extrémité des pièces polaires étant toutes les deux alignées sur un rayon prédéterminé (r1) coïncidant, et les faces d'extrémité des pièces polaires correspondant à un rayon (r2) de l'arbre (100) à mesurer.

6. Système de mesure de couple et de force selon l'une des revendications 1 à 5, les deux pièces polaires (14, 16) présentant des points de face effectifs géométriques (15a, 17a), et l'orientation angulaire (α) des deux points de face effectifs des deux pièces polaires par rapport à l'arbre à mesurer étant nettement inférieur à 180°.

7. Système de mesure de couple et de force selon la revendication 6, l'orientation angulaire (α) des deux points de face effectifs (15a, 17a) des deux pièces polaires (14, 16) par rapport à l'arbre (100) étant sensiblement de 90°.

8. Système de mesure de couple et de force selon l'une des revendications 1 à 7, les pièces polaires (14, 16) étant effilées, et les faces d'extrémité (15, 17) de celles-ci présentant la forme d'une ligne à orientation sensiblement parallèle à l'orientation de l'arbre (100) à mesurer.

9. Système de mesure de couple et de force selon l'une des revendications 1 à 8, les pièces polaires (14, 16) étant effilées de manière conique, et les faces d'extrémité (15, 17) présentant une forme de pointe.

10. Système de mesure de couple et de force selon l'une des revendications 1 à 9, le concentrateur de flux ferromagnétique (12) présentant la forme d'un fer à cheval.

11. Système de mesure de couple et de force selon l'une des revendications 1 à 10, le système de mesure de couple et de force étant réalisé de manière à amener les faces d'extrémité (15, 17) des pièces polaires (14, 16) en contact à deux dimensions avec l'arbre (100) à mesurer.

12. Système de mesure de couple et de force selon l'une des revendications 1 à 11, comprenant en outre une unité d'entraînement (30) qui est couplée à l'agencement de génération de champ magnétique (10) et qui est apte à entrainer l'agencement de génération de champ magnétique avec une fréquence de courant alternatif, fréquence CA, comprise entre 30 Hz et 10000 Hz, de préférence entre 60 Hz et 1000 Hz, et de manière encore plus préférée entre 100 Hz et 600 Hz.

13. Système de mesure de couple et de force selon l'une des revendications 1 à 12, l'agencement de détection de champ magnétique (20) comprenant une bobine de détection (29), la bobine de détection étant agencée de sorte que son sens de détection de champ magnétique principal (21) est orthogonal au sens de génération de champ magnétique principal (11) du fer à cheval, la bobine de détection étant positionnée entre les pièces polaires (14, 16) du concentrateur de flux (12) de manière à être positionnée à côté de l'arbre (100) à mesurer.

14. Système de mesure de couple et de force selon l'une des revendications 1 à 13, comprenant en outre un boîtier (50), le boîtier comprenant un logement (59) pour recevoir l'arbre à mesurer et une gorge annulaire (51) pour recevoir l'agencement de génération de champ magnétique (10), la gorge annulaire s'étendant dans un plan de gorge, la gorge annulaire présentant deux sections d'extrémité (54, 56), les sections d'extrémité étant adjacentes à l'arbre (100) à mesurer et étant tournées vers celui-ci, le boîtier comprenant un évidement (52) pour recevoir l'agencement de détection de champ magnétique (20), l'évidement s'étendant de manière orthogonale par rapport au plan de gorge et de manière adjacente au logement pour la réception de l'arbre à mesurer, et entre les sections d'extrémité de la gorge annulaire.
